Europäisches Patentamt

European Patent Office

Office européen des brevets

(19)

(11) Veröffentlichungsnummer: **0 193 786 B1**

(12) **EUROPÄISCHE PATENTSCHRIFT**

(45) Veröffentlichungstag der Patentschrift:
08.02.89

(21) Anmeldenummer: 86102090.7

(22) Anmeldetag: 18.02.86

(51) Int. Cl.⁴: **G01N 21/90**, B07C 5/34, G01V 5/00

(54) Vorrichtung zum Durchstrahlen von Containern.

(30) Priorität: 04.03.85 DE 3507611

(43) Veröffentlichungstag der Anmeldung:
10.09.86 Patentblatt 86/37

(45) Bekanntmachung des Hinweises auf die Patenterteilung:
08.02.89 Patentblatt 89/6

(84) Benannte Vertragsstaaten:
DE FR GB

(56) Entgegenhaltungen:
EP-A- 0 077 939
FR-A- 2 490 824
US-A- 3 987 301

(73) Patentinhaber: Heimann GmbH, Weher Köppel 6,
D-6200 Wiesbaden 1(DE)

(72) Erfinder: Dietrich, Rolf, Hölderlinstrasse 4,
D-6238 Hofheim(DE)
Erfinder: Dönges, Gerhard, Am Markt 1,
D-6209 Heidenrod-Kemel(DE)
Erfinder: Herwig, Thomas, Wiesenstrasse 8,
D-6228 Eltville 4(DE)

(74) Vertreter: Mehl, Ernst, Dipl.-Ing. et al, Postfach 22 13 17,
D-8000 München 22(DE)

## Beschreibung

Die Erfindung geht aus von einer Vorrichtung gemäß dem ersten Teil des Patentanspruches 1.

Eine Vorrichtung dieser Art ist beispielsweise in der US-PS 4 430 568 beschrieben. Als Strahler muß dabei für die Durchstrahlung großer Container anstelle eines Röntgenstrahlers ein Linearbeschleuniger verwendet werden, der aus prinzipiellen Gründen nur einen Abstrahlwinkel von 15° bis 20° hat. Um den gesamten Container durchstrahlen zu können, ist dabei eine sehr große Entfernung zwischen Strahler und Empfänger erforderlich. Die Intensität am Strahlenempfänger ist dabei jedoch für gefüllte Container nicht ausreichend. Eine andere Möglichkeit besteht darin, Teildurchstrahlungen durch mäanderförmige Relativbewegung zwischen Container und dem System Strahler-Strahlenempfänger durchzuführen. Dabei ist jedoch ein Übersichtsbild nicht erzeugbar, weil die Teilbilder sich bei diesem Vorgehen immer teilweise überlappen. Ferner ist ein mehrmaliges Hin- und Herbewegen des Containers oder der Strahler-Strahlenempfänger-Gruppe erforderlich. Schließlich ergeben sich auch noch Toleranzprobleme bei der gleichzeitigen Bewegung von Strahler und Strahlenempfänger, die zumindest in vertikaler Richtung erfolgen muß.

In der EP-A 0 077 939 ist eine Vorrichtung zum Durchstrahlen von Prüfgut beschrieben, bei der zwei Röntgenstrahler auf eine gemeinsame Detektorzeile strahlen. Jeder Röntgenstrahler sendet ein Strahlenbündel aus, das nur einen Teil des Prüfraumes durchsetzt. Die Detektorzeile erfaßt jedoch den gesamten Prüfraum, da die gesamte Strahlung der beiden Strahlenfächer der Strahlenquellen auf ihr auftreffen.

Der Erfindung liegt die Aufgabe zugrunde, eine Vorrichtung gemäß dem ersten Teil des Patentanspruches 1 so auszubilden, daß auch große Frachtcontainer bei möglichst geringem Bewegungs- und Zeitaufwand, möglichst geringen Abmessungen des Strahlenschutzgebäudes und hoher Intensität am Strahlenempfänger durchstrahlbar sind. Dabei soll ein Übersichtsbild des gesamten Containers erzeugbar sein, so daß die Möglichkeit zur geometrischen Bildvergrößerung und/oder Hervorhebung bestimmter Graustufen besteht.

Diese Aufgabe ist erfindungsgemäß gelöst durch die im zweiten Teil des Patentanspruches angegebene Ausbildung. Bei der erfindungsgemäßen Vorrichtung werden von mehreren Strahlenfächern jeweils Teilbereiche des Containers durchstrahlt, und die entsprechende Strahlung wird im Gegensatz zum Stand der Technik gemäß der EP-A 0 077 939 von jeweils einer individuellen Detektorzeile erfaßt. Durch Kombination der Ausgangssignale aller Detektorzeilen kann dabei ein Übersichtsbild des Containers gewonnen werden.

Zur Erzeugung der Strahlenfächer können mehrere Strahler in Transportrichtung im Abstand voneinander um den Fächerwinkel gegeneinander verdreht angeordnet sein. Es ist aber auch möglich, nur einen Strahler vorzusehen, der um eine parallel zur Transportrichtung liegende Achse schwenkbar gelagert ist. Damit Streustrahlung die Bildqualität nicht beeinflußt, können die Detektorzeilen erst empfindlich geschaltet werden, wenn auf ihnen Primärstrahlung auftrifft.

Die Erfindung ist nachfolgend anhand eines in der Zeichnung dargestellten Ausführungsbeispieles näher erläutert.

Es zeigen:

Fig. 1 eine Seitenansicht einer Vorrichtung nach der Erfindung, und

Fig. 2 eine weitere Ansicht der Vorrichtung gemäß Figur 1.

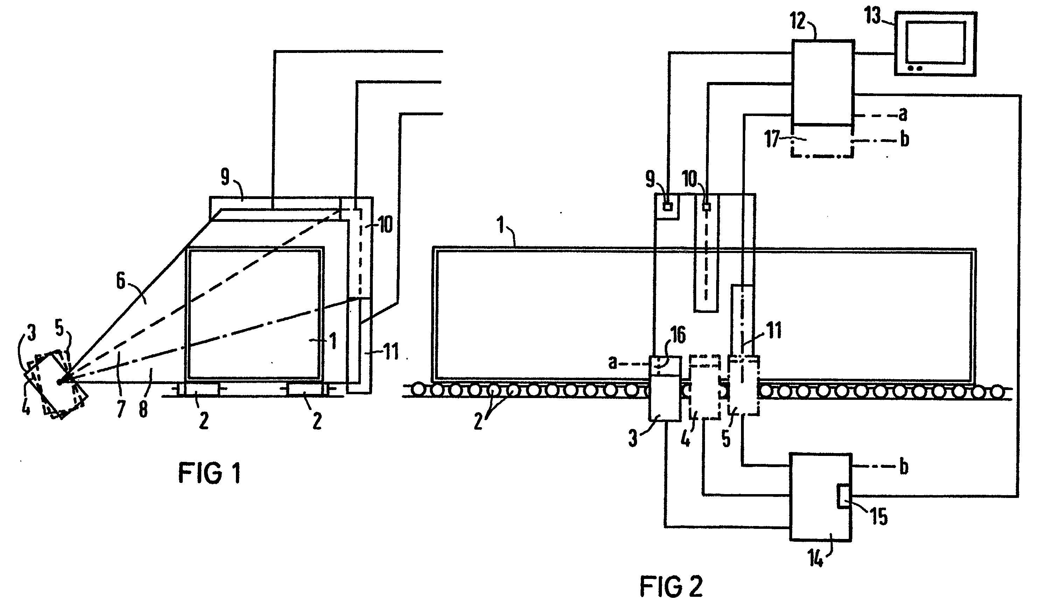

In der Zeichnung ist ein Container 1 dargestellt, der auf einer von einer Rollenbahn gebildeten Transportstrecke 2 in deren Längsrichtung transportiert wird. Zur Durchstrahlung des Containers 1 sind drei Strahler 3, 4, 5 vorgesehen, die Strahlenfächer durchdringender Strahlung erzeugen. Die Strahler 3, 4, 5 sind dabei von Linearbeschleunigern gebildet. Der Strahler 3 erzeugt dabei den Strahlenfächer 6, der Strahler 4 den Strahlenfächer 7 und der Strahler 5 den Strahlenfächer 8 (Fig. 1).

Zum Empfang der aus dem Container 1 austretenden Strahlung sind drei Detektorzeilen 9, 10, 11 den Strahlern 3, 4, 5 gegenüberliegend angeordnet, die in bekannter Weise einen Winkel bilden. Jede Detektorzeile ist dabei von einer Reihe von Einzeldetektoren für ionisierende Strahlung gebildet. Die Detektorzeile 9 empfängt den Strahlenfächer 6, die Detektorzeile 10 den Strahlenfächer 7 und die Detektorzeile 11 den Strahlenfächer 8. Die Ausgangssignale der Detektorzeilen 9, 10, 11 sind an einer Auswerteinrichtung 12 zur Signalauswertung angeschlossen, die auf einem Monitor 13 ein Übersichtsbild des Containers 1 erzeugt. Die Speisung und Steuerung der Strahler 3, 4, 5 erfolgt durch einen Generator 14.

Die Untersuchung des Containers 1 erfolgt in der Weise, daß dieser über seine gesamte Länge an den Strahlern 3, 4, 5 und den Detektorzeilen 9, 10, 11 vorbeibewegt wird.

Dabei baut die Auswerteinrichtung 12 ein Schattenbild des Containers 1 auf und bewirkt seine Wiedergabe auf dem Monitor 13. Aufgrund der Tatsache, daß durch jede Detektorzeile 9, 10, 11 jeweils die einen Teil des Containers 1 durchsetzende Strahlung und von allen Detektorzeilen 9, 10, 11 die gesamte Strahlung empfangen wird, ist es möglich, ein gesamtes Übersichtsbild des Containers 1 aus Teilbildern aufzubauen, die durch die Strahlenfächer 6, 7, 8 erzeugt werden. Die Strahler 3, 4, 5 können demgemäß relativ nahe an die Transportstrecke 2 herangewegt werden. Die Strahler 3, 4, 5 sind dabei im Abstand voneinander um den Fächerwinkel der Strahlenfächer 6, 7, 8 gegeneinander verdreht angeordnet. Es ist aber auch möglich, nur einen Strahler, beispielsweise den Strahler 3, vorzusehen und um eine parallel zur Transportrichtung liegende Achse schwenkbar zu machen, so daß sein Strahlenfächer dann nacheinander unterschiedliche Teile des Containers 1 bei ruhendem Container 1 durchstrahlt. In diesem Fall werden die Detektorzeilen 9, 10, 11 nicht wie in Figur 2 im Abstand nebeneinander, sondern in einer Ebene angeordnet.

Bei dem gezeichneten Ausführungsbeispiel kann durch die Auswerteinrichtung 12 eine automatische Empfindlichschaltung der Detektorzeilen 9, 10, 11 erfolgen, wenn Primärstrahlung auf ihnen auftrifft. Hierzu kann der Auswerteinrichtung 12 ein Pulsdetektor 15 im Generator 14 für das Auftreten von Strahlungspulsen zugeordnet sein, der die jeweiligen Einschaltzeiten der Strahler 3, 4, 5 erfaßt. Als Alternative können an den Strahlenaustrittsfenstern der Strahler 3, 4, 5 Strahlendetektoren vorhanden sein, die jeweils auftretende Strahlung erfassen. Ein solcher Strahlendetektor ist in der Figur 2 für den Strahler 3 dargestellt und mit 16 bezeichnet. Er ist dann über die Leitung a an der Auswerteinrichtung 12 angeschlossen. Schließlich kann auch ein Trigger 17 vorhanden sein, der die synchrone Einschaltung jeweils eines der Strahler 3, 4, 5 und der zugeordneten Detektorzeile 9, 10, 11 bewirkt und über die Leitung b mit dem Generator 14 verbunden ist. Die Strahler 3, 4, 5 werden nacheinander gepulst.

Für die Speicherung eines Übersichtsbildes in einem Speicher der Auswerteinrichtung 12 können die von den Detektorzeilen 9, 10, 11 erzeugten Teilbilder mit einer ihrem Entstehungsort entsprechenden zeitlichen Verschiebung eingeschrieben werden.

Linearbeschleuniger geben gepulste Strahlung mit einem Puls-Pausen-Verhältnis von etwa 1 : 1000 ab. Zur Vermeidung der Beeinflussung der Bildqualität durch Streustrahlung werden die Empfangskanäle einer Detektorzeile 9, 10 11 in der geschilderten Weise nur für die Pulszeit des zugehörigen Strahlers 3, 4, 5 empfindlich geschaltet, und die Strahler 3, 4, 5 geben nacheinander ihre Pulse ab.

Wird anstelle von drei Strahlern 3, 4, 5 in der geschilderten Weise nur ein Strahler vorgesehen, der um eine parallel zur Transportstrecke 2 liegende Achse geschwenkt wird, so muß der Container 1 zur Erzeugung eines vollständigen Übersichtsbildes mehrmals hin- und hergeschoben werden.

## Patentansprüche

1. Vorrichtung zum Durchstrahlen von Containern (1) mit fächerförmiger Strahlung (6, 7, 8) mit einer Transportstrecke (2) für die Container (1), deren Transportrichtung senkrecht zur Fächerebene liegt und mit einem zeilenförmigen Strahlenempfänger (9, 10, 11) für die aus dem jeweiligen Container (1) austretende Strahlung, der an einer Einrichtung (12) zur Signalauswertung angeschlossen ist, dadurch gekennzeichnet, daß der Strahlenempfänger von mehreren Detektorzeilen (9, 10, 11) gebildet ist, die derart ausgebildet und angeordnet sind, daß durch jede Detektorzeile (9, 10, 11) jeweils die die einen Teil des Containers (1) durchsetzende Strahlung und von allen Detektorzeilen (9, 10, 11) zusammen die gesamte Strahlung empfangen wird.

2. Vorrichtung nach Anspruch 1, dadurch gekennzeichnet, daß mehrere Strahler (3, 4, 5) in Transportrichtung im Abstand voneinander um den Fächerwinkel gegeneinander verdreht angeordnet sind.

3. Vorrichtung nach Anspruch 1, dadurch gekennzeichnet, daß ein Strahler (z.B. 3) um eine parallel zur Transportrichtung liegende Achse schwenkbar gelagert ist.

4. Vorrichtung nach einem der Ansprüche 1 bis 3, dadurch gekennzeichnet, daß eine Steuervorrichtung (15, 16) für die Detektorzeilen (9, 10, 11) vorhanden ist, die die Detektorzeilen (9, 10, 11) empfindlich schaltet, wenn Primärstrahlung auf ihnen auftrifft.

5. Vorrichtung nach Anspruch 4, dadurch gekennzeichnet, daß ein Pulsdetektor (16) für das Auftreten von Strahlungspulsen vorhanden ist, der die Einschaltung der Detektorzeilen (9, 10, 11) steuert.

6. Vorrichtung nach Anspruch 5, dadurch gekennzeichnet, daß die Steuervorrichtung (15) im Generator (14) des Strahlers bzw. der Strahler (3, 4, 5) angeordnet ist.

7. Vorrichtung nach Anspruch 5, dadurch gekennzeichnet, daß der Pulsdetektor (16) ein Strahlendetektor ist, der am Strahlenaustrittsfenster des Strahlers bzw. der Strahler (3, 4, 5) angeordnet ist.

8. Vorrichtung nach Anspruch 4, dadurch gekennzeichnet, daß ein Trigger (17) für die synchrone Einschaltung von Strahler (3, 4, 5) und zugeordneter Detektorzeile (9, 10, 11) vorhanden ist.

## Claims

1. Arrangement for the irradiation of containers (1) with fan-shaped radiation (6, 7, 8) having a transportation section (2) for the containers (1), the direction of transportation of which lies perpendicular to the fan plane and having a line-like radiation receiver (9, 10, 11) for the radiation emerging from the respective container (1), which receiver is connected to a device (12) for signal evaluation, characterised in that the radiation receiver is formed by several detector lines (9, 10, 11) which are developed and arranged such that there is received through each detector line (9, 10, 11) in each case the radiation passing through one part of the container (1) and by all the detector lines (9, 10, 11) together the total radiation.

2. Arrangement according to claim 1, characterised in that several radiators (3, 4, 5) are arranged in the direction of transportation, spaced apart and twisted in respect of each other by the fan angle.

3. Arrangement according to claim 1, characterised in that one radiator (e. g. 3) is pivoted about an axis lying parallel to the direction of transportation.

4. Arrangement according to one of the claims 1 to 3, characterised in that a control arrangement (15, 16) is present for the detector lines (9, 10, 11), which control arrangement actuates the detector lines (9, 10, 11) in a sensitive manner when primary radiation strikes them.

5. Arrangement according to claim 4, characterised in that a pulse detector (16) for the occurrence of radiation pulses is present, which detector controls the switching-on of the detector lines (9, 10, 11).

6. Arrangement according to claim 5, characterised in that the control arrangement (15) is arranged in the generator (14) of the radiator or of the radiators (3, 4, 5).

7. Arrangement according to claim 5, characterised in that the pulse detector (16) is a radiation detector which is arranged at the radiation emission window of the radiator or of the radiators (3, 4, 5).

8. Arrangement according to claim 4, characterised in that a trigger (17) is present for the synchronous switching-on of radiator (3, 4, 5) and associated detector line (9, 10, 11).

**Revendications**

1. Dispositif pour contrôler des conteneurs (1) par transillumination à l'aide d'un rayonnement en éventail (6, 7, 8), comprenant une voie de transport (2) pour les conteneurs (1), dont la direction de transport est perpendiculaire au plan de l'éventail, ainsi qu'un récepteur de rayonnement (9, 10, 11) de forme liénaire pour le rayonnement sortant du conteneur (1) contrôlé, récepteur qui est connecté à un dispositif (12) pour l'exploitation des signaux, caractérisé en ce que le récepteur de rayonnement est constitué de plusieurs lignes de détecteurs (9, 10, 11) qui sont réalisées et disposées de manière que chaque ligne de détecteurs (9, 10, 11) reçoive une partie du rayonnement traversant le conteneur (1) et de manière que toutes les lignes de détecteurs (9, 10, 11) ensemble reçoivent la totalité du rayonnement.

2. Dispositif selon la revendication 1, caractérisé en ce que plusieurs émetteurs de rayonnement (3, 4, 5) sont disposés à distance l'un de l'autre dans la direction de transport en étant mutuellement décalés d'une quantité correspondant à l'angle d'éventail.

3. Dispositif selon la revendication 1, caractérisé en ce qu'un émetteur de rayonnement (3, par exemple) est monté oscillant autour d'un axe parallèle à la direction de transport.

4. Dispositif selon une des revendications 1 à 3, caractérisé en ce qu'il comprend un dispositif de commande (15, 16) pour les lignes de détecteurs (9, 10, 11), dispositif qui, par une commutation, rend les lignes de détecteurs (9, 10, 11) sensibles lorsqu'elles reçoivent un rayonnement primaire.

5. Dispositif selon la revendication 4, caractérisé en ce qu'il comprend un détecteur d'impulsions (16) destiné à détecter l'apparition d'impulsions de rayonnement et commandant l'enclenchement des lignes de détecteurs (9, 10, 11).

6. Dispositif selon la revendication 5, caractérisé en ce que le dispositif de commande (15) est installé dans le générateur (14) de l'émetteur ou des émetteurs de rayonnement (3, 4, 5).

7. Dispositif selon la revendication 5, caractérisé en ce que le détecteur d'impulsions (16) est un détecteur de rayonnement qui est installé sur la fenêtre de sortie de rayonnement de l'émetteur ou des émetteurs (3, 4, 5).

8. Dispositif selon la revendication 4, caractérisé en ce qu'il comprend un déclencheur (17) pour l'enclenchement synchrone de l'émetteur de rayonnement (3, 4, 5) et de la ligne de détecteurs (9, 10, 11) correspondante.

FIG 2

FIG 1